(19) Europäisches Patentamt
European Patent Office
Office européen des brevets

(11) Publication number: **0 467 243 A2**

## EUROPEAN PATENT APPLICATION

(21) Application number: **91111699.4**

(22) Date of filing: **12.07.91**

(51) Int. Cl.5: **B29C 55/14**, //B29K67:00

(30) Priority: **16.07.90 JP 187427/90**

(43) Date of publication of application:
**22.01.92 Bulletin 92/04**

(84) Designated Contracting States:
**DE FR GB IT LU NL**

(71) Applicant: **DIAFOIL COMPANY, LIMITED**
**3-2, Marunouchi 2-chome**
**Chiyoda-ku Tokyo(JP)**

(72) Inventor: **Tate, Masashi**
**23-4 Tana-cho, Midori-ku**
**Yokohama-shi, Kanagawa-ken(JP)**
Inventor: **Tokunaga, Awaji**
**1195 Yahatanakayama-cho**
**Nagahama-shi, Shiga-ken(JP)**
Inventor: **Sugahara, Makoto**
**11-41 Shinzen-cho**
**Nagahama-shi, Shiga-ken(JP)**
Inventor: **Iwasaki, Hiroshi**
**163-91 Oyabu-cho**
**Hikone-shi, Shiga-ken(JP)**

(74) Representative: **TER MEER - MÜLLER -**
**STEINMEISTER & PARTNER**
**Mauerkircherstrasse 45**
**W-8000 München 80(DE)**

(54) Novel high strength polyester film and process for preparing the same.

(57) A novel polyester film having high strength and dimensional stability is disclosed. Said film is characterized in that its longitudinal modulus of elasticity $E_{MD}$ (kgf/mm$^2$), transversal modulus of elasticity $E_{TD}$ (kgf/mm$^2$) and refractive index $n_\alpha$ simultaneously satisfy the following relations (1) and (2):

$$E_{MD} + E_{TD} = 1300 \quad (1)$$

$$n_\alpha \leq 1.5153 - 2.1 \times 10^{-5} (E_{MD} + E_{TD}) \quad (2).$$

This invention relates to a process for preparing a polyester film having high mechanical strength in the longitudinal direction.

Polyester films have excellent mechanical properties and are employed in various uses. Recently, there is a demand for polyester films having particularly high strength.

However, if simply the strength of such films is en hanced, the dimensional stability is impaired and the resulting films will not be suitable as base films for magnetic recording tapes.

There has been known a method for obtaining films having high mechanical strength in the longitudinal direction, which method comprises biaxially stretching a film first and then stretching the thus biaxially stretched film further longitudinally.

By this known method, however, only films having a mechanical strength, that is, a $F_5$ value of 20 kgf/mm$^2$ are produced at the best. It has been difficult to constantly produce films having higher $F_5$ values. For instance, Japanese Laying-Open Patent Publication No. 58-118220 proposes a process for preparing a high strength polyester film employing specific stretching conditions. According to our follow-up test, however, films are very often broken when they are stretched in accordance with said proposed process, that is, said process is hardly commercially employed.

We conducted an intensive study on the above-described problem and have found the fact that the film having an index of refractive index in the direction of thickness $n_\alpha$ and tensile moduli of elasticity $E_{MD}$ and $E_{TD}$ which satisfy a specific condition are provided with high strength without dimensional stability being impaired.

This invention provides a polyester film, whose tensile modulus of elasticity in the longitudinal (machine) direction $E_{MD}$ (kgf/mm$^2$), that in the transversal direction $E_{TD}$ (kgf/mm$^2$) and refractive index $n_\alpha$ simultaneously satisfy the following relations:

$$E_{MD} + E_{TD} \geq 1300 \qquad (1)$$

$$n_\alpha \leq 1.5153 - 2.1 \times 10^{-5}(E_{MN} + E_{TD}) \qquad (2)$$

The polyester of the polyester film of the present invention comprises not less than 80 wt% of terephthalic acid moieties as an acid constituent and not less than 80 wt% of ethylene glycol moieties as a glycol constituent. In addition to these constituents, an acid constituent or constituents such as isophthalic acid, phthalic acid, 2,6-naphthalene-dicarboxylic acid, adipic acid, sebacic acid, etc. and a glycol constituent or constituents such as propylene glycol, butadiene diol, 1,4-cyclohexane dimethanol, neopentyl gylcol as comonomers.

Also it is desirable to incorporate an organic lubricant or inorganic particulate lubricant in order to improve slipperiness of the resulting film. Further stabilizers, colorants, anti-oxidants, defoamers, antistatics, etc. can also be incorporated as desired. The particulate materials to be added for improvement of slipperiness include known inert externally added particulate materials such as kaolin, clay, calcium carbonate, silicon oxide, calcium terephthalate, lithium phthalate, carbon black, etc.; high-melting organic compounds which are insoluble in polyester resins at the temperature of hot-melt film making; metal compound catalysts used in the synthesis of crosslinked polymers or polyesters; internally formed particles which are produced from alkali metal compounds, alkaline earth metal compounds, for instance, when polyesters are synthesized. The content of such fine particles is usually 0.002 - 0.9 wt% and the average particle size is preferably 0.01 - 3.5 $\mu$m.

The sum of the tensile moduli of elasticity in the longitudinal and transversal directions ($E_{MD} + E_{TD}$) is not less than 1300 kgf/mm$^2$. $E_{MD}$ should preferably be not less than 700 kgf/mm$^2$ and more preferably not less than 900 kgf/mm$^2$. Higher moduli of elasticities will bring about better contact between the magnetic head and the film when the resulting film is used as a base for magnetic recording medium, for instance.

The $F_5$ value in the longitudinal direction of the film should preferably be not less than 23 kgf/mm$^2$ and the limit rupture strength in the longitudinal direction of the film should preferably be not less than 27 kgf/mm$^2$. Further, the difference between said $F_5$ value and said limit rupture strength should preferably be not less than 2.0 kgf/mm$^2$.

The film of the present invention must satisfy the condition that the refractive index in the direction of the film thickness $n_\alpha$ and the sum of the longitudinal and transversal tensile moduli of elasticity $E_{MD} + E_{TD}$ are in the following relation:

$$n_\alpha \leq 1.5153 - 2.1 \times 10^{-5}(E_{MD} + E_{TD})$$

2

When this condition is satisfied, the film has high strength and excellent dimensional stability.

Now the process for preparing the polyester film in accordance with the present invention will be described specifically in detail.

The above-described polyester polymer was well dried and, thereafter, was formed into a film by extruding it with an extruder which was kept at 280 - 290 °C through a filter and a die and casting the hot-melt-formed sheet onto a rotating cooling drum so as to quench it. The thus quenched and solidified film was substantially amorphous and designated Film A. Film A can be a laminated film which is formed by coextruding.

Film A was well preheated to not lower than 80 °C and preferably stretched longitudinally by a stretching factor which makes the birefringence of the film $\Delta_{n1}$ $1.0 \times 10^{-3}$ - $2.5 \times 10^{-2}$. This is a first stretching and the thus treated film was designated Film B-1. The temperature of the first stretching (film temperature) is usually 90 - 130 °C, preferably 115 - 130 °C. The stretching factor $\Delta_{n1}$ of the first stretching as described above is usually in the range of 1.2 - 4.0 although depending on the preheating temperature, which can easily determined by a preliminary experiment. If the $\Delta_{n1}$ of Film B-1 is less than $1.0 \times 10^{-3}$, the thickness uniformity is impaired even if the steps that follow are optimized and thus improvement in stretching rate cannot be expected.

If the $\Delta_{n1}$ of Film B-1 is in excess of $2.5 \times 10^{-2}$, the film is remarkably crystallized in the steps that follow causing frequent breaking during the transversal stretching, that is, stable production is impossible. Thus preferable $\Delta_{n1}$ is in the range of $1.0 \times 10^{-3}$ - $10 \times 10^{-2}$.

The first stretching can be effected in one step a1 though, of course, a multistep stretching can be employed. In how many steps the first stretching should be carried out depends on the stretching factor in the first stretching, although it is usually carried out in 1 - 4 steps, preferably 1 - 3 steps. The starting point of the first stretching should preferably determined by the driven non-adherent roller and the non-adherent nip-roller and the film should be kept at a temperature lower than the glass transition temperature.

The thus obtained Film B-1, without cooling to lower than the glass transition temperature, should preferably be subjected to a second longitudinal stretching, which is carried out with a stretching factor 1.1 - 3.5 so that the birefringence $\Delta_{n1}$ be $1.0 \times 10^{-2}$ - $8.0 \times 10^{-2}$ in one or two steps. The thus longitudinally stretched film is designated Film B-2. The temperature of the second stretching is usually 90 - 130 °C, preferably 100 - 130 °C.

If the film temperature is lower than 90 °C, the thickness irregularity is not removed while the temperature in excess of 130 °C is improper since it promotes crystallization of the film material, coarsening the film surface and impairing the transversal stretching. Also, if the birefringence $\Delta_{n2}$ of Film B-2 is smaller than $1.0 \times 10^{-2}$, the thickness irregularity of the $\Delta_{n2}$ is abated. If the birefringence $\Delta_{n2}$ of Film B-2 is in excess of $8.0 \times 10^{-2}$, crystallization is promoted and this also does not contributes to removing of the thickness irregularity and the transversal stretching. Therefore, the preferable birefringence of Film B-2 is in a range of $1.5 \times 10^{-2}$ - $5.0 \times 10^{-2}$. The average refractive index $\bar{n}$ should preferably be 1.570 - 1.600. If it is less than 1.570, the film uniformity cannot achieved even if the film is further longitudinally stretched in the next stretching step. On the contrary, if the average refractive index is in excess of 1.600, the transversal stretching is markedly impaired.

The thus obtained Film B-2 should preferably be subjected to a third longitudinal stretching, which is carried out at 70 - 115 °C, preferably at 80 - 105 °C and more preferably at 80 - 95° so that the birefringence of the film $\Delta_{n3}$ become not less than 0.080. The thus formed film is designated Film B-3. If the birefringence of the Film B-3 is less than 0.080, high strength films cannot be constantly (stably) produced. The birefringence of Film B-3 $\Delta_{n3}$ should preferably be not less than 0.090, more pre-ferably not less than 0.100.

The obtained Film B-3 usually transversally stretched by a factor of 2.5 - 4.5 at a temperature ($T_1$) in the range of 90 - 150°C, preferably at 100 - 130 °C.

In the present invention, the upper limit temperature of the heat treatment ($T_2$) after the transversal stretching is determined depending upon the temperature of the transversal stretching ($T_1$). That is, when the transversal stretching temperature ($T_1$) is 110 °C or lower, the heat treatment is carried out at 140°C or lower. When the transversal stretching temperature ($T_2$) is higher than 110 °C, the heat treatment is carried out at a temperature of ($T_1$ + 30) °C or lower. If the heat treatment temperature is in excess of this range, crystallization is promoted and thus high strength films cannot be obtained. The heat treatment temperature ($T_2$ is preferably not higher than ($T_1$ + 30)°C, more preferably 80 - ($T_1$ + 10) °C.

The heat-treated film is then longitudinally stretched again at a temperature in the range of ($T_2$ - 20) to 200 °C, preferably $T_2$ to 180 ° and more preferably ($T_2$ + 10) to 170°C. This final stretching is called restretching. The factor of this restretching is such that the product of the factor of each longitudinal stretching and that of the restretching is 4.5 or more, preferably 6.0 or more. The preferred factor is 1.2 or more.

The longitudinally restretched film is heat-set at 130 - 250 °C and tentered and relaxed as desired.

Further surface treatment can be applied to the thus obtained film for further improvement of the film characteristics within the scope of the present invention.

Now the invention will be illustrated by way of working examples. However, the invention is not by any means limited to these examples within the scope which is not deviated from the claimed invention.

The methods for evaluation of the film characteristic are as follows:

(1) Tensile modulus of elasticity

A 300 mm x 20 mm test piece was cut out in the longitudinal direction from a film. The test piece was subjected to the tensile test using "Intesco Model 2001" tensile tester manufactured by Kabushiki Kaisha Intesco in a chamber the atmosphere of which was adjusted to be 23 °C and 50 % RH. The test piece was longitudinally drawn at a rate of 30 mm/min and a stress-strain curve was obtained. Using the initial straight line part of the curve, the modulus was calculated as:

$$E = \Delta_\sigma / \Delta_\epsilon$$

wherein E is tensile modulus of elasticity (kgf/mm$^2$), $\Delta_\sigma$ is the stress difference between two points on the straight line part based on the average cross-sectional area and $\Delta_\epsilon$ is the strain difference between the two points.

(2) $F_5$ value

A 50 cm x 15 mm test piece was cut out in the longitudinal direction from the film. The test piece was subjected to the tensile test using "Intesco Model 2001" tensile tester manufactured by Kabushiki Kaisha Intesco in a chamber the atmosphere of which was adjusted to be 23 °C and 50 % RH. The test piece was longitudinally drawn at a rate of 50 mm/min and the strength at 5 % elongation was measured as $F_5$.

(3) Limit rupture strength

With respect to films obtained with 3 different stretching factors at the final stage longitudinal stretching (restretching), $F_5$ was measured and the $F_5$ values were plotted against the factor of the restretching factors so as to obtain a graph. Then the factor of the restretching at which the film was broken was measured by gradually raising the factor of the restretching. The limit rupture strength was obtained by extrapolating the graph (curve) up to the $F_5$ of the test piece which was drawn by the restretching with the stretching factor at which the film was almost broken.

(4) Refractive index and birefringence

The maximum refractive index $n_\gamma$ in the film surface, the refractive index $n_\beta$ in the direction perpendicular thereto and the refractive index $n_\alpha$ in the direction of thickness were measured using an Abbe refractometer manufactured by Atago Kogaku Kabushiki kaisha (Atago Optical Co.). The birefringence was given by the formula:

$$\Delta n = n_\gamma - n_\beta$$

(5) Dimensional stability

1000 mm (longitudinal) x 25 mm test pieces were placed in a hot air circulation oven (marketed by Tabai Kabushiki Kaisha) and treated at 100 °C for 30 minutes. Thereafter, the test pieces were taken out and cooled spontaneously and the length of the test pieces were measured. Longitudinal and transversal dimensional stability are given as follows:

Dimensional Stability (%) = (A - B)/A x 100

wherein
A = length (mm) before the treatment
B = length (mm) after the treatment

Example 1

Pellets of a polyethylene terephthalate (having an intrinsic viscosity of 0.60 and containing 0.3 wt% of aluminum oxide particles 0.02 μm in average particle size and 0.3 wt% of calcium carbonate 0.7 μm in average particle size, which were added during the polymerization) were hot-melt-extruded at 285 °C into an unstretched amorphous film, which was quenched to solidify. The film was longitudinally stretched at 119 °C by a factor of 1.74 by the circumferential speed difference of multistage nip-rollers (the first longitudinal stretching). The film was further stretched at 110 °C by a factor of 2.0 (the second stretching) and at 80 °C by a factor 1.95 (the third stretching).

The thus longitudinally stretched film was transversally stretched at 110 °C by a factor of 3.8. The thus biaxially stretched film was heat-treated at 110 °C and again longitudinally stretched at 140 °C by a factor of 1.20 (the final stage longitudinal stretching or restretching). The film was finally subjected to the tension heat-setting at 210 °C. Thus a film having a 10 $\mu$m thickness.

Example 2

The procedures of Example 1 were repeated with the exception that the stretching factor in the third longitudinal stretching was 1.75 and that in the restretching was 1.20. Thus a 1 $\mu$m thick film was obtained.

Comparative Example 1

The amorphous film obtained in Example 1 was stretched at 90 °C by a factor of 2.7 by the circumferential speed difference of multistage nip rollers (the first longitudinal stretching). The thus stretched film was passed through rollers of 70 °C so as to cool it to 80 °C and further stretched at 70 °C by a factor of 1.74.

The longitudinally stretched film was then stretched transversally at 105 °C by a factor of 3.8 and heat-treated at 130 °C. Thus treated film was restretched at 105 °C by a factor of 1.23 and heat-set under tension at 210 °C. Thus a 12 $\mu$m thick film was obtained.

Comparative Example 2

A transversally stretched film obtained in the same manner as in Comparative Example 1 was heat-treated at 150 °C. The film was further longitudinally stretched (restretched) at 125 °C by a factor of 1.13 and heat-set under tension at 210 °C and thus a 12 $\mu$m thick film was obtained.

Example 3

Pellets of a polyethylene terephthalate (having an intrinsic viscosity of 0.60 and containing 0.3 wt% of aluminum oxide particles 0.02 $\mu$m in average particle size and 0.3 wt% of calcium carbonate 0.7 $\mu$m in average particle size, which were added during the polymerization) were hot-melt-extruded at 285 °C and quenched to solidify into an unstretched amorphous film. The film was longitudinally stretched at 121 °C by a factor of 1.77 by the circumferential speed difference of multistage nip-rollers (the first longitudinal stretching). The film was further stretched at 110 °C by a factor of 2.0 (the second stretching) and at 80 °C by a factor 1.91 (the third stretching).

The thus longitudinally stretched film was transversally stretched at 110 °C by a factor of 3.8. The thus bi-axially stretched film was heat-treated at 110 °C and again longitudinally stretched at 140 °C by a factor of 1.22 (the final stage longitudinal stretching or restretching). The film was finally subjected to the tension heat-setting at 210°C. Thus a film having a 10 $\mu$m thickness was obtained.

Example 4

The procedures of Example 3 was repeated with the exception that the factor of the third stretching was 1.75 and that of the restretching was 1.64. Thus a 10 $\mu$m thick film was obtained.

Comparative Example 3

The amorphous film obtained in Example 3 was stretched at 118 °C by a factor of 1.64 (the first longitudinal stretching) and further longitudinally stretched at 110 °C by a factor of 2.20 (the second longitudinal stretching).

The thus longitudinally stretched film was then trans-versally stretched at 110 °C by a factor of 3.80, heat-treated at 110 °C and finally longitudinally stretched again at 140 °C by a factor of 2.20.

Comparative Example 4

The amorphous film obtained in Example 3 was stretched at 118 °C by a factor of 1.64 (the first longitudinal stretching) and further longitudinally stretched at 110 °C by a factor of 2.70 (the second longitudinal stretching).

The thus longitudinally stretched film was then transversally stretched at 110 °C by a factor of 3.80, heat-treated at 110 °C and finally longitudinally stretched again at 140 °C by a factor of 1.90.

The results of the examples and comparative examples are summarized in Table 1.

Table 1

| | $\Delta n_1$ | $\Delta n_2$ | $\Delta n$ | $T_1$ (°C) | $T_2$ (°C) | $T_3$ (°C) | $F_5$ value kg wt/mm² | L.R.S. kg wt/mm² | $n_\alpha$ | $E_{MD} + E_{TD}$ | Dimensional Stability |
|---|---|---|---|---|---|---|---|---|---|---|---|
| Exam. 1 | 0.003 | 0.019 | 0.100 | 110 | 110 | 140 | 31.1 | 37.8 | 1.4830 | 1420 | 1.28 |
| Exam. 2 | 0.003 | 0.019 | 0.120 | 110 | 110 | 140 | 30.2 | 35.3 | 1.4837 | 1410 | 1.24 |
| Comp. Exam. 1 | 0.040 | — | 0.100 | 105 | 130 | 105 | 20.0 | 21.3 | 1.4889 | 1315 | 1.23 |
| Comp. Exam. 2 | 0.040 | — | 0.100 | 105 | 150 | 125 | 18.6 | 19.8 | 1.4897 | 1280 | 1.19 |
| Exam. 3 | 0.003 | 0.020 | 0.100 | 110 | 110 | 140 | 29.7 | 34.9 | 1.4849 | 1416 | 1.21 |
| Exam. 4 | 0.003 | 0.019 | 0.120 | 110 | 110 | 140 | 29.0 | 34.5 | 1.4842 | 1410 | 1.25 |
| Comp. Exam. 3 | 0.003 | 0.028 | 0.028 | 110 | 110 | 140 | 26.9 | 34.0 | 1.4864 | 1380 | 1.79 |
| Comp. Exam. 4 | 0.003 | 0.041 | 0.041 | 110 | 110 | 140 | 30.1 | 35.8 | 1.4869 | 1420 | 1.72 |

**Claims**

1. A polyester film whose longitudinal modulus of elasticity $E_{MD}$ (kgf/mm²), transversal modulus of elasticity $E_{TD}$ (kgf/mm²) and refractive index $n_\alpha$ simultaneously satisfy the following relations (1) and (2):

$$E_{MD} + E_{TD} = 1300 \qquad (1)$$

$$n_{\alpha} \leq 1.5153 - 2.1 \times 10^{-5} (E_{MD} + E_{TD}) \qquad (2)$$

2. The polyester film as claimed in Claim 1, whereof the longitudinal modulus of elasticity $E_{MD}$ is not less than 700 kgf/mm$^2$.

3. The polyester film as claimed in Claim 2, whereof the longitudinal $F_5$ value is not less than 23 kgf/mm$^2$.

4. The polyester film as claimed in any of Claims 1, 2 and 3, whereof the 27 kgf/mm$^2$.

5. A process for preparing a high strength polyester film comprising transversally stretching a polyester film which has been longitudinally stretched at least once, heat-treating and longitudinally restretching in sequence under the following conditions (3) - (4):

$$T_2 \leq 140 \text{ (provided that } T_1 \leq 110) \qquad (3)$$

$$T_2 \leq T_1 \text{ (provided that } T_1 > 110) \qquad (4)$$

$$T_2 - 20 \leq T_3 \leq 200 \qquad (5)$$

wherein $T_1$ is the temperature of the transversal stretching ($^{\circ}$C), $T_2$ is the temperature of the heat treatment after the transversal stretching and immediately before the longitudinal restretching ($^{\circ}$C) and $T_3$ is the temperature of the longitudinal restretching($^{\circ}$C).